(19) Europäisches Patentamt
European Patent Office
Office européen des brevets

(11) Veröffentlichungsnummer: **0 360 060**
**A1**

(12) # EUROPÄISCHE PATENTANMELDUNG

(21) Anmeldenummer: 89116255.4

(22) Anmeldetag: 02.09.89

(51) Int. Cl.5: C08G 69/16 , C08G 69/20

(30) Priorität: 17.09.88 DE 3831709

(43) Veröffentlichungstag der Anmeldung: 28.03.90 Patentblatt 90/13

(84) Benannte Vertragsstaaten: DE FR GB IT NL

(71) Anmelder: BAYER AG
D-5090 Leverkusen 1 Bayerwerk(DE)

(72) Erfinder: Heinz, Hans-Detlef, Dr.
Breslauer Strasse 31
D-4150 Krefeld(DE)
Erfinder: Meyer, Rolf-Volker, Dr.
Buchheimer Strasse 23
D-4150 Krefeld(DE)

(54) **Verzweigte (Co)Polyamide durch Polykondensation in Gegenwart von Lysin-Komponenten/Polycarbonsäure-Gemischen.**

(57) Die Erfindung betrifft durch beschleunigte Polykondensation von geeigneten Monomerschmelzen in Gegenwart kleiner Mengen von Lysin-Komponenten und etwa äquivalenten Mengen einer Polycarbonsäure hergestellte, gegebenenfalls einer thermischen Nachkondensationsreaktion zu unterwerfende thermoplastisch verformbare, leicht verzweigte aliphatische (Co)Polyamide hohen Molekulargewichts, mit erhöhten Schmelzviskositäten und ausgeprägter Strukturviskosität, und ein Verfahren zur Polykondensation. Als Lysin-Komponenten werden dabei Lysin, Lysinhydrat, Ester von Lysin mit niedrigen Alkoholen, oder auch Lysin-hydrochloride (letztere in Gegenwart von etwa äquivalenten Mengen an gleichfalls zugesetzten Basen zur Bindung des HCl) verwendet.

EP 0 360 060 A1

## Verzweigte (Co)Polyamide durch Polykondensation in Gegenwart von Lysin-Komponenten/Polycarbonsäure-Gemischen

Die Erfindung betrifft durch beschleunigte Polykondensation von geeigneten Monomerschmelzen in Gegenwart kleiner Mengen von Lysin-Komponenten und etwa äquivalenten Mengen einer Polycarbonsäure hergestellte, gegebenenfalls einer thermischen Nachkondensationsreaktion zu unterwerfende, thermoplastisch verformbare, leicht verzweigte aliphatische (Co)Polyamide hohen Molekulargewichts mit erhöhten Schmelzviskositäten und ausgeprägter Stukturviskosität und ein Verfahren zur Polykondensation.

Polyamide sind eine seit vielen Jahren für eine Vielzahl praktischer Anwendungen bewährte Klasse von Polymeren, die nach verschiedenen Verfahren hergestellt, die aus sehr unterschiedlichen Polyamidbildenden Bausteinen synthetisiert und die im speziellen Anwendungsfall, allein oder auch in Kombination mit z.B. Verarbeitungshilfsmitteln, Stabilisatoren, polymeren Legierungspart nern oder auch mineralischen Verstärkungsmaterialien (wie z.B. Füllstoffe oder Glasfasern), zu Werkstoffen mit speziell eingestellten Eigenschaftskombinationen ausgerüstet werden können.

So setzt man Polyamide in großen Mengen zur Herstellung von Fasern, Kunststoff-Formteilen und Folien, aber auch z.B. als Schmelzkleber und Hilfsmittel in einer Vielzahl von Anwendungen technisch ein.

Während Lactame kationisch, hydrolytisch (mit Wasserzusatz) oder auch anionisch zu Polyamiden umgewandelt werden können, kommt für die Polyamid-Herstellung aus polyamidbildenden Monomeren wie Diaminen, Dicarbonsäuren bzw. geeigneten Derivaten, Aminocarbonsäuren sowie Lactamen, im wesentlichen nur die Polykondensations-Reaktion in Frage (s. Vieweg, Müller; Kunststoff-Handbuch, Bd. VI, S. 11 ff, Carl-Hanser-Verlag, München 1966).

Auch bei der Herstellung von Polyamiden aus Lactamen, z.B. von Polyamid-6 aus $\epsilon$-Caprolactam, hat die"hydrolytische Polymerisation" die größte Bedeutung.

Zur Herstellung der Polyamide sind eine Vielzahl von Verfahrensweisen bekannt geworden, wobei, je nach gewünschtem Endprodukt, unterschiedliche Monomerbausteine zur Bestimmung der Matrix-Natur, verschiedene Kettenregler zur Einstellung eines angestrebten mittleren Molgewichts oder auch Monomere mit "reaktiven" Gruppen für später beabsichtigte Nachbehandlungen (z.B. Amino gruppen oder Sulfonatgruppen zur bessern Anfärbbarkeit von Fasern mit sauren bzw. basischen Farbstoffen) eingesetzt werden können.

Kontinuierliche Herstellungsverfahren sind ebenso bekannt wie die diskontinuierliche Produktion, z.B. in Autoklaven.

Allen Methoden zur Herstellung von (Co)Polyamiden durch Polykondensation bzw. durch hydrolytische Polymerisation der Lactame ist jedoch gemeinsam, daß, ausgehend von geeigneten Monomermischungen, die Herstellung der (Co)Polyamide viele Stunden Reaktionszeit in Anspruch nimmt, bis die Polyamide zum Abspinnen von Strängen aus der Polymerschmelze ausreichend hohe Molgewichte erreichen bzw. die Molgewichte für den geplanten Praxiseinsatz ausreichend hoch sind.

Unabhängig von der hohen Reaktionszeit ist in vielen Fällen noch eine Nachkondensation - z.B. in der Festphase - erforderlich, um noch größere Molgewichte zu erzielen. Auch diese Festphasen-Nachkondensation erfordert im allgemeinen beachtliche Verweilzeiten bei hohen Temperaturen, wobei Produkte mit besonders hoher Schmelzviskosität, wie sie für viele Extrusionsanwendungen gewünscht werden, besonders hohe Verweilzeiten benötigen aufgrund der mit steigendem Molekulargewicht sinkenden Reaktionsgeschwindigkeit.

Die zur Herstellung der (Co)Polyamide erforderlichen hohen Reaktionszeiten begrenzen somit gravierend die Kapazität der Herstellungsanlagen und sind, insbesondere, da die Reaktion bei Temperaturen von über 200 °C, meist über 250 °C, immer aber oberhalb des Schmelzpunktes des herzustellenden Produktes erfolgen muß, in hohem Maße energieverbrauchend und kostspielig.

Eine wesentliche Verkürzung der Reaktionszeiten bei der Herstellung von (Co)Polyamiden, sowohl bei der Polykondensation als auch bei einer Festphasen-Nachkondensation - ohne Verzicht auf die bekannten guten anwendungstechnischen Eigenschaften der Produkte - wäre somit als großer, insbesondere kostensparender Fortschritt anzusehen.

Überraschend wurde nun gefunden, daß die Polykondensationszeit zur Herstellung von (Co)Polyamiden aus Lactamen und/oder Aminocarbonsäuren und/oder Diamin-Dicarbonsäure-Mischungen bzw. den jeweiligen Nylon-Salzen bzw. geeigneten PA-bildenden Derivaten deutlich verkürzt werden kann, wenn man den polyamidbildenden Ausgangsstoffen geringe Mengen Lysin-Komponenten sowie in etwa äquivalente Mengen einer Polycarbonsäure ohne vorherige Salzbildung zusetzt.

Überraschenderweise wurde weiterhin gefunden, daß die entstandenen Lysin-modifizierten Polyamide sich auch wesentlich schneller als Standardtypen nachkondensieren lassen, wobei auch Produkte mit

besonders hoher Schmelzviskosität gut zugänglich sind.

Gegenstand der Erfindung ist daher ein Verfahren zur beschleunigten Herstellung von (Co)Polyamiden aus einem oder mehreren Lactamen und/oder Aminocarbonsäuren und/oder Diamin/Dicarbonsäure-Mischungen bzw. den entsprechenden Nylon-Salzen bzw. geeigneten Polyamid-bildenden Derivaten durch Schmelz-Polykondensation, dadurch gekennzeichnet, daß der Monomerenmischung

a) 0,1 bis 1,0 Gew.-%, vorzugsweise 0,3 bis 0,9 Gew.-% Lysin-Komponenten,

b) die in etwa äquivalente Menge einer Polycarbonsäure, vorzugsweise einer Dicarbonsäure,

c) und im Falle von Lysin-Hydrochloriden zusätzlich in etwa äquivalente, den Chlorwasserstoff bindende anorganische Basenmengen,

und gegebenenfalls weitere Zusatzstoffe, zugesetzt werden und die Schmelzepolykondensation in üblicher Weise durchgeführt wird.

Gegenstand der Erfindung sind auch die nach dem Verfahren hergestellen Polyamide.

Der Schmelze-Polykondensation kann ein Verfahren zur Herstellung besonders hochmolekularer (Co)-Polyamide durch Festphasen-Nachkondensation dieser, mit Lysinkomponenten modifizierten (Co)Polyamide unter schonenden Nachkondensationsbedingungen, d.h. bei verminderter Reaktionszeit bei gleichen Temperaturen wie bei Polyamiden ohne den erfindungsgemäßen Anteil an Lysin/Polycarbonsäuren oder verminderter Reaktionstemperatur bei gleichen Nachkondensationszeiten, angeschlossen werden. Beispielsweise kann die Nachkondensationszeit um 30 bis 50 % oder mehr verkürzt werden, um teilverzweigte, hochmolekulare (Co)Polyamide mit hohen Schmelzviskositäten zu erhalten. Das Festphasen-Nachkondensationsverfahren ist Gegenstand einer weiteren, gemeinsam angemeldeten Erfindung (siehe Le A 26 337/P-38 31 709.5).

Es sind viele Versuche beschrieben worden, durch Cokondensation mit basische Gruppen enthaltenden, polyamidbildenden Bausteinen basische Polyamide zu erhalten, die insbesondere bei Einsatz als Fasern mit sauren Farbstoffen leichter anfärbbar sind.

So wird in US 3 651 023 z.B. offenbart, daß mit einer Reihe von verschiedenen derartigen Zusatzstoffen eine verbesserte Anfärbbarkeit von Polyamidfasern und eine höhere Farbintensität erreichbar ist.

Als einer aus mehreren Beispielen zu verwendender Zusatzstoff, wird in US 3 651 023 auch Lysin genannt, wobei die in den aufgeführten Beispielen 1, 2 und 9-12 beschriebenen Polyamide sich von den anderen nicht charakteristisch unterscheiden. Insbesondere lassen die Beispiele erkennen, daß der Zusatz von Lysin, allein bzw. in Kombination mit einer Monocarbonsäure, keinerlei Verkürzung der Reaktionszeit zuläßt, daß im Gegenteil sogar mit z.B. 5 Gew.-% Lysin das Polyamid aufgrund seiner zu geringen Schmelzviskosität nicht mehr versponnen werden kann.

Ein Hinweis auf die Verwendung annähernd äquivalenter Lysin/Polycarbonsäure-Mischungen fehlt in der genannten Patentschrift völlig.

Erfindungsgemäß kann die Reaktionszeit nur bei Verwendung eines annähernd aquivalenten Einsatzes von Lysin-Komponente und einer Polycarbonsäure (vorzugsweise Dicarbonsäure) signifikant verringert werden.

In der japanischen Auslegeschrift 12 139/64 wird die Verwendung von gesondert hergestellten Salzen aus Lysin und aliphatischen Dicarbonsäuren mit 0 bis 8 Methylengruppen zwischen den Carboxylgruppen, zur Herstellung hochmolekularer Polyamide offenbart. Diese werden in einer Menge von 0,5 bis 5,0 Gew.-%, bevorzugt 1,0 bis 3,0 Gew.-% zugesetzt. Dieses Verfahren weist eine Reihe von Nachteilen auf; zum einen muß in einem gesonderten Schritt das Salz aus Lysin und der Dicarbonsäure hergestellt werden, was den Prozeß verkompliziert und verteuert. Dazu kommt, daß die Menge des Salzes von 0,5 bis 5,0 Gew.-%, bevorzugt 1,0 bis 3,0 Gew.-%, wobei die Beispiele eine Menge von 1,5 bis 2,0 Gew.-% eines Salzes aus Lysin und Sebacinsäure als optimal erscheinen lassen, in Anbetracht des Preises von Lysin und z.B. Sebacinsäure in nicht unbeträchtlicher Weise den Preis des Endproduktes negativ beeinflusst. Weiterhin tritt mit steigendem Anteil an Lysin(derivaten) eine zunehmende Verfärbung in den (Co)Polyamiden auf. Auch die Gefahr einer unerwünschten Vernetzung nimmt mit steigender Salzmenge zu, so daß die reproduzierbare Herstellung von Polyamiden nach JA 12 133/64 erschwert erscheint.

Es war somit völlig unvorhersehbar und überraschend, daß die Kombination von Lysin-Komponenten und Polycarbonsäuren ohne vorherige Salzbildung, vor dem Reaktionsbeginn dem Monomeransatz zugesetzt, zu einer drastischen Beschleunigung der Polyamidbildung führt, wobei völlig unvorhersehbar geringere Mengen an Lysin(derivaten) und Polycarbonsäuren (Dicarbonsäuren) ausreichen, als für das Verfahren der JA 12 139/64 dargelegt ist. Weiterhin enthält diese japanische Auslegeschrift keinerlei Hinweis darauf, daß die Lysin/Salz-modifizierten Polyamide sich wesentlich besser als Standardtypen, vorzugsweise in der festen Phase, nachkondensieren lassen.

Überraschenderweise ergibt dabei ein Zusatz von Lysin-Komponenten, einem trifunktionellen Baustein, im Gemisch mit den Polycarbonsäuren, nicht, wie der Stand der Technik es erwarten läßt, vernetzte und

damit zur Herstellung von Formkörpern ungeeignete Polyamide.

Ausgangsmaterialien für die Polyamidbildung:

Zur Herstellung der (Co)Polyamide sind als Lactame ω-Lactame mit 5-13 C-Ringgliedern wie z.B. ε-Caprolactam, Önanthlactam, Caprylactam und Laurinlactam, allein oder im Gemisch, geeignet, vorzugsweise ε-Caprolactam und Laurinlactam. Besonders bevorzugt wird ε-Caprolactam eingesetzt.

Geeignete Diamine sind z.B. $C_{2-20}$-Alkylendiamine wie Tetramethylendiamin, Hexamethylendiamin, Decamethylendiamin u.a.m. und Cycloalkylendiamine wie 1,4-Diaminocyclohexan, Bis-(4-aminocyclohexyl)-methan, 5-Amino-1- aminomethyl-1,3,3-trimethylcyclohexan (Isophorondiamin) u.a.m., wie sie vielfach im Stand der Technik benannt sind.

Geeignete Dicarbonsäuren sind aliphatische $C_{2-38}$-Dicarbonsäuren wie z.B. Adipinsäure, Azelainsäure, dimerisierte Fettsäuren u.a., aromatische $C_{6-14}$-Dicarbonsäuren wie z.B. Isophthalsäure, Terephthalsäure u.a. sowie Cycloalkylendicarbonsäuren wie z.B. 1,3- oder 1,4-Cyclohexandicarbonsäure. In den Diamin/Dicarbonsäure-Mischungen können anstelle der freien Dicarbonsäuren z.B. auch deren Ester mit niedrigsiedenden Alkoholen verwendet werden, z.B. Adipinsäurediethylester.

Geeignete ω-Aminocarbonsäuren zur Polyamidherstellung sind z.B. ω-$C_4$-$C_{18}$-Aminocarbonsäuren wie z.B. Aminocapronsäure, Aminoundecansäure und Aminoheptansäure. Bevorzugte Aminocarbonsäuren sind ε-Aminocapronsäure und ω-Aminoundecansäure.

Bevorzugte Diamine sind Hexamethylendiamin, Tetramethylendiamin und Dodecamethylendiamin.

Bevorzugte Dicarbonsäuren sind Adipinsäure, Azelainsäure, Sebacinsäure, Dodecamethylendicarbonsäure und dimerisierte Fettsäuren.

Bevorzugte Diamin/Dicarbonsäure-Mischungen bzw. Nylon-Salze sind solche aus Hexamethylendiamin und Adipinsäure bzw. Sebacinsäure bzw. Azelainsäure und solche aus Tetramethylendiamin und Adipinsäure.

Die Polyamid-Bausteine können in praktisch beliebigen Gemischen eingesetzt werden; bevorzugt sind allerdings aliphatische Polyamide bzw. solche, die nur einen untergeordneten Gehalt (<50 Gew.-%) an aromatischen Einheiten enthalten.

Lysin-Komponenten:

Neben Lysin (2,6-Diamino-hexansäure) selbst können auch Lysinhydrat oder Ester niederer ($C_1$-$C_4$-)Alkohole wie z.B. Lysinmethylester eingesetzt werden. Bevorzugt werden Lysinhydrat bzw. wäßrige Lösungen von Lysin eingesetzt.

Es können auch Lysin-mono- oder -dihydrochloride oder Lysinester-monohydrochloride bzw. Lysinester-dihydrochloride eingesetzt werden.

In diesem Fall der Hydrochloride müssen etwa äquivalente Mengen an (anorganischen) Basen zur Neutralisation mitverwendet werden (d.h. bei Monohydrochloriden 1 Äquivalent, bei Dihydrochloriden 2 Äquivalente an Basen).

Als Alkoholkomponente in Lysinestermono- und -dihydrochloriden sind insbesondere niedrig siedende Alkohole wie Methanol, Ethanol und gegebenenfalls tert.-Butanol geeignet. Bevorzugte Lysinhydrochloride sind das L-Lysindihydrochlorid, das DL-Lysinmonohydrochlorid sowie das L-Lysinmonohydrochlorid. Besonders bevorzugt ist das L-Lysinmonohydrochlorid. L-Lysinmonohydrochlorid wird großtechnisch durch z.B. Fermentationsprozesse hergestellt (s. Ullmanns Encyclopädie der technischen Chemie, 4. neu bearbeitete und erweiterte Auflage, Bd. 7, Verlag Chemie, Weinheim/Bergstraße, 1974).

Es können bei den Lysin-Komponenten die einzelnen optischen Antipoden des Lysins oder beliebige Gemische, z.B. das Racemat, eingesetzt werden.

Als anorganische Basen in der erfindungsgemäßen Beschleunigerkombination sind z.B. Oxide, Hydroxide und Carbonate verschiedener Metalle geeignet, z.B. Natriumhydroxid, Kaliumhydroxid, Natriumcarbonat, Kaliumcarbonat, Magnesiumhydroxid, Magnesiumcarbonat, Calciumhydroxid, Natriumoxid, Kupferhydroxid, Kupfercarbonat, Calciumcarbonat, Manganhydroxid, Mangancarbonat u.a. Bevorzugte anorganische Basen sind Natriumhydroxid, Kaliumhydroxid, Natriumcarbonat und Kaliumcarbonat. Besonders bevorzugt werden Natrium- und Kaliumhydroxid eingesetzt.

Die Zugabe der Lysin-Polycarbonsäure-Komponenten kann getrennt oder gemeinsam erfolgen, in jedem Fall aber vorteilhaft als jeweilige Zugabe (ohne vorherige Herstellung eines Salzes) zur Reaktionsmischung, vor oder zu Beginn der Reaktion der Polyamidbildung. Gegebenenfalls werden die Basen (bei den

Hydrochloriden) mit eingearbeitet.

Die einzusetzende Menge Lysin-Komponenten beträgt 0,1 bis 1,0 Gew.-%, bevorzugt 0,3 bis 0,9 Gew.-% an Lysin-Segmenten im (Co)Polyamid, sowie die annähernd äqui valente Menge einer Polycarbonsäure. Die Äquivalenz berechnet sich dabei nur auf die zweite (d.h. freie) Aminogruppe der Lysin-Komponenten. (In Lysin ist z.B. die eine Aminogruppe durch die Carboxylfunktion salzartig beansprucht). Als Lysinsegment wird dabei das Segment

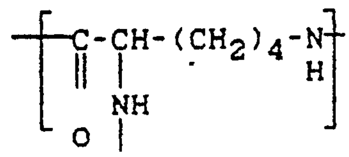

verstanden. Die Mengen an einzusetzenden Lysin-Komponenten lassen sich leicht aus ihrem Gehalt an Lysinsegmenten ausrechnen.

Die zusammen mit Lysin in annähernd äquivalenten Mengen einsetzbaren Polycarbonsäuren werden ebenfalls vorzugsweise aus den genannten Säuren ausgewählt. Es können aber auch gegebenenfalls anteilsweise höherfunktionelle Carbonsäuren, z.B. Tricarbonsäuren oder Tetracarbonsäuren eingesetzt werden.

Bevorzugt sind insbesondere längerkettige aliphatische Dicarbonsäuren $HOOC(CH_2)_m \cdot COOH$ mit $m \geq 4$ Methylengruppen, cycloaliphatische Dicarbonsäuren wie 1,3- oder 1,4-Cyclohexandicarbonsäure oder (weniger bevorzugt) aromatische Dicarbonsäuren wie Isophthalsäure oder Terephthalsäure oder ihre Gemische.

Man kann die Reaktionsbeschleunigung durch Lysin/Polycarbonsäure-Zusatz auch vorteilhaft dazu benutzen, die Polyamid-Synthese bei niedrigerer Temperatur durchzuführen. Dies führt z.B. bei der Polyamid-6-Herstellung aus $\epsilon$-Caprolactam zu höheren Polyamid-Ausbeuten bzw. der niedrigeren Polykondensationstemperatur entsprechend, zu niedrigeren Monomer/Oligomer-Extrakten im lysinhaltigen (Co)-Polyamid.

Der Polykondensationsansatz kann auch Stabilisatoren wie beispielsweise Metallsalze (z.B. Cu-, Mn-Salze) und sterisch gehinderte Phenole bzw. Amine enthalten.

Weiterhin können Additive wie Nucleierungsmittel, Pigmente, Gleitmittel, Farbstoffe, Ruß und andere enthalten sein.

Es können auch Monocarbonsäuren als Kettenabbrecher in üblichen Mengen anwesend sein.

Die Polykondensation kann kontinuierlich oder diskontinuierlich erfolgen.

Die erfindungsgemäß erhaltenen Polyamide können in bekannter Weise aus der Schmelze, vorzugsweise in ein Wasserbad, ausgetragen, gehäckselt, gegebenenfalls extrahiert und getrocknet werden.

Den Polyamiden können die bereits obengenannten Additive und Stabilisatoren, Glasfasern oder andere Verstärkungsfasern, Verstärkungsstoffe wie z.B. Kaolin oder die dem Stand der Technik bekannten Schlagzähmodifikatoren zugesetzt werden.

Aus den Polyamiden können ebenso in bekannter Weise durch thermoplastische Verarbeitung Formkörper, Fasern, Folien und andere Gegenstände hergestellt werden.

Das erfindungsgemäße Verfahren, (nämlich die Reaktionsbeschleunigung durch die Lysinkomponenten-a), Polycarbonsäurne-b) sowie bei Verwendung von Lysinhydrochloriden der anorganischen Basen-c) Zusatz), läßt sich insbesondere auch zur beschleunigten Herstellung von Konzentraten (Masterbatches) auf Basis von Polycaprolactamen oder anderen Polyamiden, z.B. Farb(Pigment)-, Stabilisator-, Entformungsmittel-, Mattierungsmittel oder Nukleiermittelkonzentraten u.a. m., durch Herstellung der Lysin-modifizierten Polyamide bei Anwesenheit relativ großer Mengen der Farbstoffe, Pigmente, Stabilisatoren, Entformungsmittel, Mattierungsmittel, Nukleiermittel bzw. der anderen Hilfsstoffe nutzen.

Gegenstand der Erfindung sind daher insbesondere auch Konzentrateauf Basis von Polyamiden, z.B. Farb-, Stabilisator-, Entformungsmittel-, Mattierungsmittel (Pigment) oder Nukleiermittel-Konzentrate u.a.m., hergestellt durch Polykondensation nach dem erfindungsgemäßen Verfahren. Die erfindungsgemäß erhaltenen Konzentrate können dann in Thermoplaste, bevorzugt in Polyamide, in üblicher Weise eingearbeitet werden.

Gegenstand der Erfindung sind auch die Thermoplaste, welche mit erfindungsgemäß erhaltenen Konzentraten ausgerüstet sind, sowie Formkörper, Folien, Fasern und andere Gegenstände aus diesen Thermoplasten.

Beispielsweise kann ein 30%iges Titandioxid-Konzentrat durch das erfindungsgemäße Verfahren in nur

der halben Reaktionszeit hergestellt werden, wodurch sich die Herstellungskosten dieses Konzentrats deutlich verringern. Das erfindungsgemäße Konzentrat kann dann zur Herstellung von Polyamidfasern verwendet werden. Die erfindungsgemäßen, mit dem erfindungsgemäßen Konzentrat ausgerüsteten, Fasern weisen die gleichen guten Eigenschaften wie konventionelle Fasern auf, sind jedoch mit geringeren Herstellungskosten behaftet.

In gleicher Weise können z.B. Farb(Pigment)-Konzentrate für die Ausrüstung von Polyamid-Spritzgußtypen hergestellt werden. Gerade hier kann sich die reduzierte thermische Belastung der Farbstoffe/Pigmente vorteilhaft auswirken. Die erfindungsgemäßen, mit erfindungsgemäßen Konzentraten ausgerüsteten, Polyamid-Massen weisen nach Verarbeitung die selben guten Eigenschaften wie mit konventionellen Konzentraten ausgerüstete, konventionelle Massen auf, sind jedoch ebenfalls mit geringeren Produktionskosten behaftet. Die Farbqualität kann durch die geringere thermische Belastung der Farbstoffe/Pigmente jedoch verbessert sein als zusätzlicher Effekt.

Es ist in einer anderen Ausführungsform der Erfindung besonders vorteilhaft die Lysin/Polycarbonsäure-Zusätze enthaltenden Polyamide einer anschließenden Festphasen-Nachkondensation zu unterwerfen, wobei PA-6 und 66 bzw. 6/66-Copolyamid bevorzugt sind und in einer überraschend schnellen Reaktion (d.h. kurzer Nachkondensationszeit) hochmolekulare Polyamide mit einer hohen Schmelzviskosität und mit vorteilhaften mechanischen Eigenschaften ergeben (siehe gleichzeitig eingereichte Anmeldung Le A 26 337-P 3 831 708).

Zur Nachkondensation wird Polyamid-Granulat in einem Temperaturbereich von 140 bis 250 °C, bevorzugt 160 bis 230 °C, immer jedoch mindestens 10 °C, bevorzugt mindestens 20 °C unterhalb der Schmelztemperatur des jeweiligen Polyamids, im Vakuum oder unter einem Inertgas(strom) für eine gewünschte Zeit erhitzt. Je länger die Zeit gewählt wird, desto höher sind die erreichten Molekulargewichte.

Die Festphasen-Nachkondensation kann diskontinuierlich, z.B. im Taumeltrockner oder Wendelmischer, und kontinuierlich erfolgen. Bevorzugt wird als Inertgas $N_2$ verwendet. Die Nachkondensationszeiten werden zweckmäßig im Bereich von 0,5 bis 30 h, bevorzugt 1,0 bis 20 h gewählt, wobei die längeren Reaktionszeiten bevorzugt bei niedrigeren Temperaturen und umgekehrt angewendet werden.

Mittels Festphasen-Nachkondensation sind auch Lysinhaltige (Co)Polyamide mit sehr hohen Schmelzviskositäten und ausgeprägter Strukturviskosität herstellbar. Diese Typen sind besonders für den Einsatz im Extrusions- und Blas-Verformungsbereich geeignet. Produkte mit sehr hoher Schmelzviskosität sind insbesondere solche, welche Schmelzviskositäten >1200 Pa.s/270 °C und einem Scherge fälle von ca. 1 $s^{-1}$ aufweisen. Die Produkte sind zumeist stark strukturviskos und somit wahrscheinlich leicht verzweigt.

Bevorzugtes (Co)Polyamid hierfür nach der Erfindung sind Polyamid 6 bzw. solche Polyamide, die reich an Caprolactam-Einheiten sind.

Sie weisen insbesondere bei gleichen Reaktionsbedingungen gegenüber Lysin-freien Produkten einen gegebenenfalls erhöhten $\eta_{rel}$-Wert und besonders eine erhöhte Schmelzviskosität auf. Sie besitzen eine ausgeprägte Strukturviskosität. Dieses rheologische Verhalten läßt auf eine leicht verzweigte Struktur schließen. Sie lassen sich auch leicht zu Produkten mit erhöhter Schmelzviskosität nachkondensieren. Sie weisen im wesentlichen dasselbe Eigenschaftsbild auf wie Vergleichsprodukte, sind aber ökonomischer und schneller herstellbar.

Die nachfolgenden Beispiele erläutern die Erfindung, ohne sie darauf einzuschränken.

## Beispiele

### Beispiele 1-3

92,5g ε-Caprolactam, 9,4 g Aminocapronsäure, 0,66 g Lysinhydrat und 0,38 g Azelainsäure wurden in einen 250 ml Rundkolben eingewogen. Nach Inertisierung mit $N_2$ wird unter Rühren auf 200 °C aufgeheizt und 1h bei dieser Temperatur gehalten. Anschließend wird auf 270 °C aufgeheizt und unter langsamem Rühren polykondensiert. Die Kolben wurden abgenommen, nach Erkalten des Polymeren zerschlagen und anschließend das Polymere gehäckselt und mit $H_2O$ extrahiert.

In Tabelle 1 sind die Reaktionszeiten, Lösungs- sowie Schmelzviskositäten zusammengestellt.

### Vergleichsbeispiele 1-3

In derselben Weise wurde Polyamid 6 ohne den erfindungsgemäßen Lysin/Polycarbonsäure-Zusatz

polykondensiert. Die Daten sind der Tabelle 1 zu entnehmen.

Beispiele 4-6

In der für die Beispiele 1-3 beschriebenen Weise wurde ein Copolyamid, bestehend aus ca. 92 Mol-% Caprolactam und ca. 8 Mol-% AH-Salz (Salz aus Adipinsäure und Hexa methylendiamin), unter Zusatz von 0,66 g Lysinhydrat und 0,38 g Azelainsäure hergestellt.

Die Daten sind der Tabelle 1 zu entnehmen.

Vergleichsbeispiele 4-6

In derselben Weise wurde ein entsprechendes Copolyamid ohne Lysinhydrat/Azelainsäure-Zusatz hergestellt.

Die Daten sind der Tabelle 1 zu entnehmen.

Tabelle 1

| Beispiel Nr. | Zeit bei 270 °C (h) | $\eta_{rel}$ *) | SV **) | |
|---|---|---|---|---|
| | | | 1 $s^{-1}$ | 10 $s^{-1}$ |
| 1 | 1 | 2,5 | - | 105 |
| 2 | 3 | 3,4 | 900 | 660 |
| 3 | 6 | 3,9 | 2800 | ca. 1300 |
| Vergleich 1 | 1 | 2,3 | - | 56 |
| 2 | 3 | 3,1 | 200 | 190 |
| 3 | 6 | 4,1 | 1200 | 1000 |
| 4 | 2 | 3,0 | 580 | 470 |
| 5 | 3 | 3,3 | 1400 | 830 |
| 6 | 4 | 3,3 | 2100 | 970 |
| Vergleich 4 | 2 | 2,5 | 300 | 270 |
| 5 | 3 | 3,1 | 440 | 400 |
| 6 | 4 | 3,3 | 510 | 440 |

*) $\eta_{rel}$ bedeutet die relative Lösungsviskosität einer 1 gew.-%igen Lösung in m-Kresol bei 25 °C

**) SV bedeutet die Schmelzviskosität bei 270 °C

1 $s^{-1}$ bedeutet das Schergefälle 1.

10 $s^{-1}$ bedeutet das Schergefälle 10.

Beispiele 7-11

In der für die Beispiele 1 bis 3 beschriebenen Weise wurde PA6 aus 81,5 g Caprolactam und 9,4 g Aminocapronsäure mit verschiedenen Mengen Lysinhydrat/Azelainsäure hergestellt. Die Polykondensationszeit betrug 3h bei 270 °C.

Die Daten sind der Tabelle 2 zu entnehmen.

Ähnliche Ergebnisse werden erhalten, wenn man statt Azelainsäure äquivalente Mengen an Adipinsäure, Sebacinsäure oder Dodecandicarbonsäure einsetzt.

Vergleichsbeispiele 7-8

In derselben Weise wurde ein Polyamid 6 ohne den erfindungsgemäßen Zusatz hergestellt. Die Daten

sind der Tabelle 2 zu entnehmen.

Tabelle 2

| Beispiel Nr. | Menge (g) Lysinhydrat/AzS | $\eta_{rel}$ | SV | |
|---|---|---|---|---|
| | | | 1 s | 10 s |
| 7 | 0,33/0,19 | 3,0 | 560 | 490 |
| 8 | 0,99/0,56 | 3,3 | 1650 | - |
| Vergleich 7 | - | 3,0 | 270 | 260 |
| 9 | 0,16/0,094 | 3,0 | 410 | 390 |
| 10 | 0,49/0,28 | 3,2 | 1000 | 750 |
| 11 | 1,31/0,75 | 3,7 | 1800 | 800 |
| Vergleich 8 | - | 2,7 | - | 105 |

Beispiele 12-15

In der für die Beispiele 4-6 beschriebenen Weise wurden verschiedene 6/66-Copolyamide mit 0,66 g Lysinhydrat und 0,38 g Azelainsäure hergestellt.

Die Daten sind der Tabelle 3 zu entnehmen.

Vergleichsbeispiele 9-12

In der für die Beispiele 12-15 beschriebenen Weise wurden dieselben Copolyamide ohne den erfindungsgemäßen Zusatz hergestellt. Die Daten sind der Tabelle 3 zu entnehmen.

Tabelle 3

| Beispiel Nr. | PA6/66 (ca.) | CL | AH-Salz (g) | Zeit bei 270° C (h) | $\eta_{rel}$ | SV*) (270° C) |
|---|---|---|---|---|---|---|
| 12 | 82/18 | 80 | 20 | 2 | 2,8 | 180 |
| 13 | 75/25 | 75 | 29 | 0,8 | 3,2 | - |
| 14 | 15/85 | 15 | 98,5 | 1 | 4,9 | - |
| 15 | 15/85 | 15 | 98,5 | 2 | 5,1 | - |
| Vergleich 9 | 82/18 | 80 | 20 | 2 | 2,6 | 100 |
| Vergleich 10 | 75/25 | 75 | 29 | 0,8 | 2,7 | - |
| Vergleich 11 | 15/85 | 15 | 98,5 | 1 | 3,2 | - |
| Vergleich 12 | 15/85 | 15 | 98,5 | 2 | 3,2 | - |

*) = Schmelzviskosität in Pa.s (bei der angegebenen Temperatur) und (hier) einem Schergefälle von 1-10 $s^{-1}$).

Beispiel 16

In diesem Beispiel wird die beschleunigte Herstellung eines Polyamid 610 demonstriert.

41,1 g Hexamethylendiamin, 71,6 g Sebazinsäure, 0,65 g Lysinhydrat und 0,37 g Azelainsäure wurden in einen 250 ml Rundkolben gegeben und nach Inertisierung für 1h auf 200° C erhitzt. Anschließend wurde die Temperatur auf 270° C erhöht und 1h polykondensiert. Das entstandene PA 6/10 hatte eine hohe

Schmelzviskosität und einen $\eta_{rel}$-Wert von 4,1.

Vergleichsbeispiel 13

In derselben Weise wurde ein Polyamid 610 ohne den erfindungsgemäßen Zusatz hergestellt. Die Schmelzviskosität war niedrig, $\eta_{rel}$ betrug 2,6.

Beispiele 17-18

Polyamid 6-Granulat, hergestellt nach Beispielen 1-3, wurde in einem Rundkolben, der mit 50 U $min^{-1}$ rotierte, bei 170 °C im Stickstoffstrom (40 l $N_2$ $h^{-1}$) 3 und 7h lang nachkondensiert.

Die Daten sind der Tabelle 4 zu entnehmen.

Vergleichsbeispiel 14

In derselben Weise wurde Polyamid 6-Granulat einer relativen Viskosität von 2,9, welches nicht Lysin-modifiziert war, 7h lang nachkondensiert.

Die Daten sind der Tabelle 4 zu entnehmen.

Tabelle 4

| Beispiel Nr. | FestphasenNachkondensation bei 170 °C in Stunden | $\eta_{rel}$ | SV (250 °C, 1 $s^{-1}$) |
|---|---|---|---|
| nach Beispiel 1) Ausgangsmaterial* | 0 | 2,8 | ca. 400 |
| 17 | 3 | 3,3 | 1700 |
| 18 | 7 | 3,9 | 2900 |
| Ausgangsmaterial | 0 | 2,9 | ca. 190 |
| Vergleich 14 | 7 | 3,2 | ca. 480 |

*) Das Ausgangsmaterial wurde wie in Beispiel 1 hergestellt und 120 Minuten bei 270 °C polykondensiert.

Wie die Beispiele zeigen, führt der erfindungsgemäße Zusatz von Lysin(derivaten)/Polycarbonsäuren in wesentlich geringerer Zeit als ohne Zusatz zu hochmolekularen Polyamiden, wobei sowohl die Schmelzpolykondensation als auch die Festphasen-Nachkondensation beschleunigt werden.

Beispiel 19

81,5 g Caprolactam, 9,4 g Aminocapronsäure, 0,65 g L-Lysinmonohydrochlorid, 0,34 g Azelainsäure und 1,44 g 10 % wäßrige NaOH wurden in einen 250 ml Rundkolben eingewogen. Nach Inertisierung mit $N_2$ wurde unter Rühren auf 200 °C aufgeheizt und 1 h bei dieser Temperatur gehalten. Anschließend wurde die Temperatur auf 270 °C erhöht und unter langsamem Rühren 3 h lang polykondensiert. Der Kolben wurde abgenommen und nach Erkalten des Polymeren zerschlagen. Das Polymere wurde gehäckselt und mit Methanol 24 h lang extrahiert.

Die Daten sind in Tabelle 5 zusammengestellt.

Vergleichsbeispiel 15

In derselben Weise wurde eine PA 6-Probe ohne irgendeinen Teil der Beschleunigerkombination hergestellt. Die Daten sind in Tabelle 5 zusammengestellt.

Beispiel 20

In der für das Beispiel 19 beschriebenen Weise wurde eine PA 6-Probe mit 0,72 g L-Lysinmonohydrochlorid, 0,38 g Azelainsäure und 1,6 g 10 %iger wäßriger NaOH hergestellt. Die Polykondensationszeit betrug 2 h. Die Daten sind in Tabelle 5 enthalten.

Vergleichsbeispiel 16

In derselben Weise wurde eine PA 6-Probe ohne irgendeinen Teil der Beschleunigerkombination hergestellt. Die Daten sind in Tabelle 5 zusammengestellt.

Beispiel 21

In der für die Beispiele 19 und 20 beschriebenen Weise wurde ein 6/66-Copolyamid aus 80 g Caprolactam und 23,2g AH-Salz hergestellt (ca. 75/25 6/66-Co-Polyamid). Zur Beschleunigung der Reaktion wurden 0,72 g L-Lysinmonohydrochlorid, 0,37 g Azelainsäure und 1,6 g 10 %. wäßrige NaOH zugegeben. Die Polykondensationszeit bei 270° C betrug 3 h.
Die Daten sind in der Tabelle 5 enthalten.

Vergleichsbeispiel 17

In derselben Weise wurde ein Co-Polyamid ohne Beschleuniger hergestellt. Die Daten sind in Tabelle 5 enthalten.

Beispiel 22

In der für die Beispiele 19 und 20 beschriebenen Weise wurde ein 6/66-Copolyamid aus 15 g Caprolactam und 98,5g AH-Salz (15/85 6/66-CO-PA) hergestellt. Zur Beschleunigung wurden dieselben Mengen der Kombination zugesetzt wie in Beispiel 21.
Die Daten sind in Tabelle 5 angegeben.

Vergleichsbeispiel 18

Beispiel 22 wurde ohne Zugabe der Beschleunigerkombination wiederholt. Die Daten sind in Tabelle 5 enthalten. (PA = Polyamid; Bsp = Beispiel-Nr; Vgl = Vergleichsbeispiel).

Tabelle 5

| Bsp. | PA-Typ | Zeit bei 270 °C (h) | $\eta_{rel}$ [1] | SV [1] bei 270 °C (Pas) |
|---|---|---|---|---|
| 19 | 6 | 3 | 3,2 | 625 |
| Vgl.15 | 6 | 3 | 3,3 | 250 |
| 20 | 6 | 2 | | 300 |
| Vgl.16 | 6 | 2 | 2,9 | ca. 100 |
| 21 | ca. 75/25 6/66-CoPA | 3 | 3,8 | |
| Vgl.17 | 6/66-CoPA | 3 | 3,3 | |
| 22 | 15/85 6/66-CoPA | 2 | 3,9 | 7000 |
| Vgl.18 | 6/66-CoPA | 2 | 3,2 | 300 |

[1] Schmelzviskosität bei einem Schergefälle von 0,3-3 $s^{-1}$.

Beispiel 23

10 kg Caprolactam, 1 kg Wasser, 71,3 g L-Lysinmonohydrochlorid, 27 g Adipinsäure und 15,6 g NaOH wurden in einen 25 l-Autoklaven eingewogen und nach Inertisierung unter Eigendruck für 1 h auf 200 °C erhitzt. Anschließend wurde auf Atmosphärendruck entspannt und gleichzeitig auf 270 °C aufgeheizt. Der Aufbau der Schmelzviskosität wurde über die Drehzahl eines mit konstanter Kraft laufenden Rührwerks bestimmt. Nach ca. 1,5 h bei 270 °C war die gewünschte Schmelzviskosität erreicht. Der Rührer wurde ausgeschaltet, das Polyamid eine Stunde absitzen lassen und dann mit $N_2$ aus dem Kessel gedrückt. Über ein Wasserbad wurden die Stränge einer Häckselmaschine zugeführt, mit $H_2O$ extrahiert und getrocknet. Das Produkt besaß eine relative Viskosität von 2,9.

Ohne Beschleuniger wird in einem Vergleichsversuch bis zum Erreichen derselben Schmelzviskosität in etwa die doppelte Zeit benötigt.

Beispiel 24

Ca. 50 g des nach Beispiel 23 erhaltenen PA 6-Granulats wurden bei 170 °C in einem Stickstoffstrom von 40 l $h^{-1}$ bei 50 U/$min^{-1}$ in einem Rotationsverdampfer 7 h lang in der Festphase nachkondensiert. Die Ergebnisse sind in Tabelle 6 zusammengestellt.

Vergleichsbeispiel 19

In derselben Weise wurde nicht modifiziertes PA 6-Granulat derselben Lösungsviskosität nachkondensiert. Die Daten sind in Tabelle 6 zusammengestellt.

Tabelle 6

| Beispiel | Zeit bei 170 °C (h) | $\eta_{rel}$ | SV bei 250 °C (Pas) (2,26 $s^{-1}$) |
|---|---|---|---|
| 24 | 7 | 3,2 | 1325 |
| Ausgangsmat. = Bsp. 23 | - | 2,9 | 300 |
| Vgl. 19 | 7 | 3,2 | ca. 480 |
| Ausgangsmat. | - | 2,9 | ca. 190 |

Wie die Beispiele zeigen, kann durch Einsatz der erfindungsgemäßen Beschleunigerkombination die Reaktionszeit bis zum Erreichen einer gewünschten Schmelzviskosität deutlich reduziert werden bzw. können in derselben Zeit Produkte mit höherer Schmelzviskosität hergestellt werden.

## Ansprüche

1. Verfahren zur beschleunigten Herstellung von leicht verzweigten (Co)Polyamiden aus einem oder mehreren Lactamen und/oder Aminocarbonsäuren und/oder Diamin/Dicarbonsäure-Mischungen bzw. -Salzen, und oder geeigneten Polyamid-bildenden Derivaten, dadurch gekennzeichnet, daß der Monomerenmischung

a) Lysinkomponenten in solchen Mengen, daß 0,1 bis 1,0 Gew.-%, bevorzugt 0,3 bis 0,9 Gew.-% an Lysinsegementen

- C -   CH -  $(CH_2)_4$-NH-
  ||    |
  O    NH -

im (Co)Polyamid enthalten sind,

b) die der zweiten Lysin-Aminogruppe in etwa äquivalenten Menge einer Polycarbonsäure, und gegebenenfalls

c) im Falle der Verwendung von Lysin-Hydrochloriden, zusätzlich in etwa äquivalente, den Chlorwasserstoff bindenden anorganische Basenmengen, sowie gegebenenfalls Zusatzstoffe

zugesetzt werden und in üblicher Weise polykondensiert wird.

2. Verfahren nach Anspruch 1, dadurch gekennzeichnet, daß die Lysin-Komponente und die Polycarbonsäure dem Reaktionsgemisch ohne vorherige Salzbildung vor oder zu Beginn der Reaktion zugesetzt wird.

3. Verfahren nach Ansprüchen 1 und 2, dadurch gekennzeichnet, daß als Lysin-Komponente Lysin, Lysinhydrat, Lysinester niederer Alkohole, vorzugsweise Lysinmethylester, und Lösungen von Lysin, vorzugsweise in Wasser, eingesetzt werden, wobei Lysinhydrat und wäßrige Lösungen von Lysin bevorzugt sind, und wobei die reinen optischen Antipoden des Lysins oder beliebige Mischungen derselben eingesetzt werden.

4. Verfahren nach Anspruch 1, dadurch gekennzeichnet, daß als Lysin-Komponente a) Lysin-Hydrochloride und in etwa äquivalente, den Chlorwasserstoff bindende Mengen anorganische Basen c) eingesetzt werden.

5. Verfahren nach Ansprüchen 1 und 4, dadurch gekennzeichnet, daß als anorganische Basen Natriumhydroxid, Kaliumhydroxid, Kalium(hydrogen)carbonat oder Natrium(hydrogen)carbonat eingesetzt werden.

6. (Co)Polyamide, hergestellt nach Verfahren gemäß Ansprüchen 1 bis 5, enthaltend 0,1 bis 1,0 Gew.-% an Lysin-Segmenten und Polycarbonsäuren als modifizierende Komponenten.

7. (Co)Polyamide, hergestellt nach Verfahren gemäß Ansprüchen 1 bis 6, dadurch gekennzeichnet, daß Lysin(hydrat) und aliphatische Dicarbonsäuren $COOH(CH_2)_m \cdot COOH$ mit $m \geq 4$, cycloaliphatische Dicarbonsäuren oder aromatische Dicarbonsäuren als modifizierende Komponenten zugesetzt werden.

8. Verwendung der Polyamide nach Ansprüchen 6 und 7 zur Herstellung von Formkörpern, Fasern, Folien und anderen Gegenständen.

9. Farb(Pigment)-, Stabilisator-, Entformungsmittel-, Mattierungsmittel-, Nukleiermittelkonzentrate (Masterbatches) und andere Konzentrate, hergestellt durch Polymerisation von Caprolactam und/oder anderer Polyamid bildender Komponenten bei Anwesenheit relativ großer Mengen der entsprechenden Hilfsstoffe nach dem Verfahren der Ansprüche 1 bis 5.

10. Thermoplaste, enthaltend Konzentrate (Masterbatches) nach Anspruch 9, sowie aus diesen Thermoplasten hergestellt Formkörper, Folien, Fasern und andere Gegenstände.

Europäisches Patentamt

# EUROPÄISCHER RECHERCHENBERICHT

Nummer der Anmeldung

EP 89 11 6255

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | DE-A-1 907 034 (ICI)<br>* Ansprüche 1-5 * | 1-10 | C 08 G 69/16<br>C 08 G 69/20 |
| A | FR-A-2 097 190 (BAYER)<br>* Ansprüche 1-10 * | 1-10 | |
| A | FR-A-2 210 634 (ICI)<br>* Ansprüche 1-10 * | 1-10 | |

| RECHERCHIERTE SACHGEBIETE (Int. Cl.5) |
|---|
| C 08 G |

Der vorliegende Recherchenbericht wurde für alle Patentansprüche erstellt

| Recherchenort | Abschlußdatum der Recherche | Prüfer |
|---|---|---|
| DEN HAAG | 11-12-1989 | GLANDDIER A. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument